# EUROPEAN PATENT SPECIFICATION

(11) **EP 1 074 973 B1**
(45) Date of publication and mention of the grant of the patent: **15.03.2006**
(21) Application number: 00109959.7
(22) Date of filing: 11.05.2000
(51) Int. Cl.: G10L 15/06

(54) **Method of expanding a vocabulary of a speech system**
Verfahren zur Erweiterung des Wortschatzes eines Spracherkennungssystems
Procédé pour l'expansion du vocabulaire d'un système de reconnaissance de la parole

(30) Priority: 30.06.1999 EP 99112441
(43) Date of publication of application: 07.02.2001
(73) Proprietor: International Business Machines Corporation, Armonk, NY 10504 (US)
(72) Inventor: Backfried, Gerhard, 3002 Purkersdorf (AT); Crépy, Hubert, 92100 Boulogne (FR)
(74) Representative: Teufel, Fritz

(56) References cited:
- WO-A-98/45834
- US-A- 5 212 730
- DESHMUKH N ET AL: "An advanced system to generate pronunciations of proper nouns" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 1467-1470, XP010226082 ISBN: 0-8186-7919-0

## Description

### 1 Background of the Invention

### 1.1 Field of the Invention

The present invention relates in general to improved speech systems. More particularly the present invention relates to a method and means for adding new words with yet unseen spellings and pronunciations to the vocabulary of a speech system.

### 1.2 Description and Disadvantages of Prior Art

Today's speech recognition systems, such as "command and control" or "dictation" systems, all typically contain predefined vocabularies, consisting of words, their pronunciations and some model of the usage of these words described by a language model. State-of-the-art systems may contain several tens of thousands of such entries which are used at runtime to determine what is being said.

Regardless of the size of the vocabulary, all systems suffer from the fact that they offer only a limited, fixed vocabulary to the user. The fact that commercially available systems typically only contain full form vocabularies (i.e. they do not model separately the morphology of the language) further limits the effective scope of today's vocabularies. This is especially limiting for highly inflective languages such as French, German or Slavic languages. Consequently almost every user will need to add to this vocabulary their own special terms, names or expressions to fit their individual needs. Being able to extend the base vocabulary with specific terms thus becomes an important issue and frequent activity when using speech recognition systems. From a principle point of view, the language vocabularies have to be viewed as "open or living systems" which never can comprise all possible words of a certain language; in addition, technical limitations (storage requirements and processing load) make it even more impossible to achieve this goal. Thus the methodology and quality of the process to extend a certain vocabulary with new words is an important success factor of speech systems.

The pronunciations of words in a vocabulary are typically stored as phonetic transcriptions (be it phonemes, sub-phonemes or combinations of phonemes). Adding new words to the vocabulary requires the generation of such phonetic transcriptions (pronunciations) to allow for the subsequent recognition of these words. It is imperative that a speech recognition system build adequate acoustic models for these new words, as recognition accuracy is strongly dependent on the quality of these models. Generating inadequate models is likely to result in degraded overall performance and lower recognition accuracy of the system. Therefore any improvement of the methodology and quality of this extension process is of great importance.

According to the current state of the art a word is typically added to the system by having the user type in the new word and constructing from the spelling (and most often a sound sample, i.e. the user pronouncing the new word) a new acoustic pattern to be used in future recognition. An algorithmic or statistical system, broadly called a **Letter-to-Sound System** (LTS), is used to derive the most likely pronunciation(s) of the sequence of letters composing the orthographic representation of the word. In general a Letter-To-Sound-System maps individual letters or combinations of letters to a sequence of phonemes which match their pronunciation. Frequently a statistical approach is used to generate such systems. An important example for the statistical approach are CARTs (classification and regression trees). The results generated by a LTS are then combined with the acoustics provided by the user to generate the actual pronunciation(s). A detailed description of one example of how a statistical system may be employed for this task is taught by J.M.Lucassen and R.L.Mercer "An Information Theoretic Approach to the Automatic Determination of Phonemic Baseforms", Proc. of ICASSP-84, 42.5.1-42.5.4, 1982.

A further example of a known extensible speech recognition system employing LTS is disclosed in patent document WO-A-98/45834.

Frequently, however, the words added are words derived of a foreign language, customers' names, acronyms, or technical terms generally not obeying the pronunciation rules of the language per se. This is likely to result in inferior pronunciations being generated which will cause frequent misrecognitions when running the system, thus degrading the overall performance and quality of the speech system. Sophisticated systems may detect that the acoustics provided (for instance by the user pronouncing the word) do not match the generated candidate pronunciations and prompt the user for some additional input. However, since users of these systems usually are not phoneticians or even versed in phonetics, it is important, both from a usability and efficacy point of view to limit their involvement in the generation of these pronunciations to a minimum.

Some systems allow to specify a **sounds-like-spelling** (SLS) pattern (a pseudo-spelling of the word that corresponds to the way the word is pronounced in the given language, like "eye-triple-ee" for English for the word "IEEE") to support this process. This approach puts the onus on the user to determine whether the word to be added indeed follows the standard pronunciation rules or not, and to provide an alternative spelling that does. These rules are not clearly defined and may even vary within subdomains of a language. This approach tends to break down with users who are either not very careful, not very familiar with the language and/or domain or who are not very well versed in phonetics.

Letter-to-Sound Systems are also used in various other applications of speech systems, such as speech synthesis of words that are not in the basic lexicon. Like speech-recognition-systems, these **text-to-speech** synthesis systems (TTS) are faced with a similar difficulty when trying to generate the pronunciation of a word that is not in their basic lexicon.

To demonstrate the urgency of improvements in this area reference is made for instance to the "Angie" framework (an example of a Letter-to-Sound System) description in Aarati D. Parmar - master Thesis, MIT 97, A Semi-Automatic System for the Syllabification and Stress Assignment of Large Lexicons, available at: http://www.sls.lcs.mit.edu/sls/publications/index.html. In this experiment, on the TIMIT database, 10 words out of 2500 failed to generate a correct pronunciation because of "irregular spelling" or "failed letter rules". And this test set even does not include acronyms, or anything of the like which are likely to be encountered in everyday business environments.

### 1.3 Objective of the Invention

The invention is based on the objective to provide an improved method and means for adding new words with yet unseen spellings and pronunciations to the vocabulary of a large vocabulary of a speech system.

### 2 Summary and Advantages of the Invention

The objectives of the invention are solved by the independent claims. Further advantageous arrangements and embodiments of the invention are set forth in the respective subclaims.

The invention relates to a computerized method of adding a new word to a vocabulary of a speech system said vocabulary comprising words and corresponding acoustic patterns for a language or language domain. Within a determination-step for said new word a regularity value is determined which measures the conformity with respect to the pronunciation in said language or language domain. In a comparison-step the regularity value is compared to a threshold value to decide, whether the conformity is insufficient. Only in the affirmative case of insufficient conformity a prompting-step is performed, prompting for additional information on the pronunciation of said new word. Finally in an extension-step the new word and an acoustic pattern of said new word to the vocabulary.

The current invention proposes an automatic determination of the regularity of a proposed word with respect to the standard pronunciation of the language; this lowers the requirement for attention and skills on the user's part in the extension process of a vocabulary. It is neither left up to the user when additional information concerning the pronunciation of a new word are to be introduced to the speech system nor is this additional information omitted when it is needed. Otherwise in both cases the construction of inferior pronunciation models would be the consequence. As the recognition accuracy is strongly dependent on the quality of these models the proposed teaching results in an improved overall performance and higher recognition accuracy of the speech system. The quality of the generated pronunciations in speech systems is improved.

Furthermore, as a user's involvement by prompting him for additional information with respect to the pronunciation is reduced to a minimum, the user-interface can be kept simpler and the user will not have to be exposed to unneeded complexity. As words likely to be pronounced in a standard way do not require further action valuable time-savings are the result. This is a major selling argument for typical clients using speech-recognition systems such as lawyers and medical doctors.

The current teaching is inherently language and domain independent and may thus be applied to a variety of languages and domains without further extension. This property is of specific advantage in view of the large number of different languages and language domains which all can be supported with a single solution approach.

Finally the reduced number of failures during adding new words to a vocabulary leads to a reduced user frustration and an improved perception of system usability.

### 3 Brief Description of the Drawings

**Figure 1** visualizes the process of adding a new word with yet unseen spelling and pronunciation to the vocabulary of a speech recognition system according to the current state of the art.
**Figure 2** reflects the process of building a language model forming the base for the determination of the regularity value of a new word to be added to the vocabulary. Moreover within the overall process it is depicted when the determination of the threshold takes place.
**Figure 3** visualizes a typical set of perplexity value distributions over a large set of samples. As can be seen, the curve tapers out towards the high-perplexity end. According to the current invention this defines the zone best suited to set the threshold this approach is based upon.
Figure 4 shows in a contrasting view with respect to Fig. 1 the process of adding a new word with yet unseen spelling and pronunciation to the vocabulary of a speech recognition system according to the current invention.

### 4 Description of the Preferred Embodiment

In the drawings and specification there has been set forth a preferred embodiment of the invention and, although specific terms are used, the description thus given uses terminology in a generic and descriptive sense only and not for purposes of limitation.

The current invention is using term "speech system" in its most general meaning comprising speech recognition systems as well as speech synthesis systems.

### 4.1 Introduction

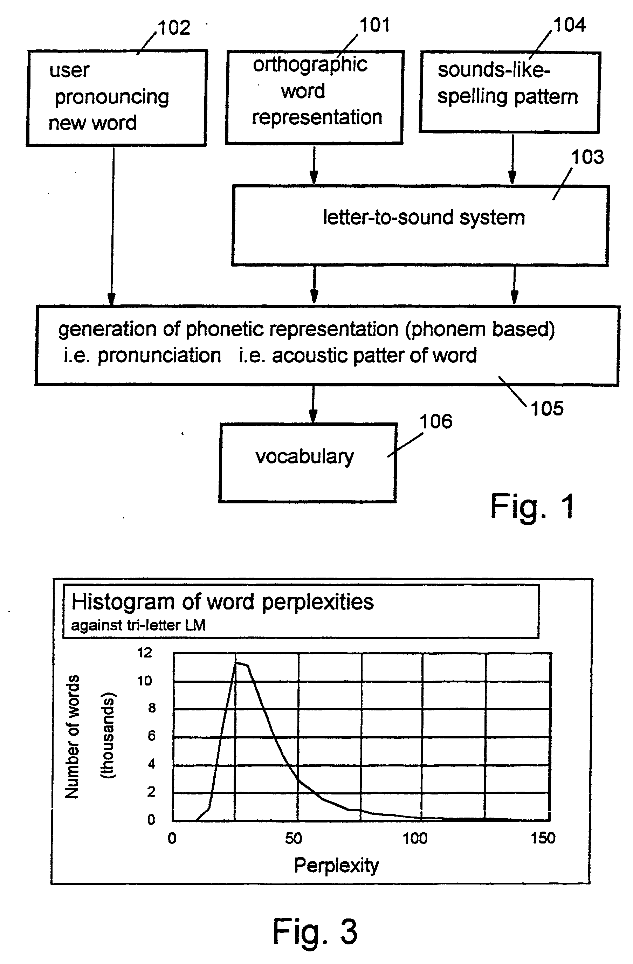

One example of a speech recognition system as described above offering the possibility to extend and.adapt its vocabulary by adding new words is the IBM ViaVoice series of products (for example ViaVoice 98 Executive- , Home- or Office-Edition). As an example Fig. 1 visualizes the process of adding a new word with yet unseen spelling and pronunciation to the vocabulary of a speech recognition system according to the current state of the art.
In these systems, the process of adding a new word encompasses the steps of obtaining from the user the new spelling (101) and the acoustic information of how this spelling is to be pronounced (102). This sound-sample is then used in combination with a statistical system (103) - a LTS system in the current example - mapping letters to sequences of phonemes to ultimately construct a phonetic representation of the newly added word. The statistical system used in this process was built by training it on a predefined large corpus of words obeying the general rules of pronunciation for the language. It generally performs very well for regularly spelled words of the language.

Some words, however, do not follow the standard way of pronunciation for a language. This is especially true of foreign words, words derived from a foreign language, acronyms, abbreviations or proper names. The vocabulary extension process of the ViaVoice product thus allows for the specification of a **"sounds-like-spelling"** (104) - a pseudo spelling indicating how a word is really to be pronounced - to be used instead of the spelling (101) in these situations. In general a sounds-like-spelling is a pseudo-spelling describing how another spelling is to be pronounced. For example for an acronym like "IEEE" in English this might be "eye-triple-ee". The sounds-like-spelling provides the link between the real spelling and the pronunciation. A good sounds-like-spelling proves to be the key for generating the correct pronunciation for irregularly spelled words. Its presence is essential in the construction of a suitable model for the pronunciation. Based on the output generated by the statistical system (103) (from the spelling (101) or the sounds-like-spelling pattern(104)) and the user's pronunciation of the new word (102) a phonetic representation of the new word is generated (105) and finally added to the vocabulary (106).

However, exactly when such a sounds-like-spelling is needed is left up to the user. Omitting it when it is needed may lead to the construction of inferior pronunciation models. Providing it when it is not needed introduces additional effort on the user's side. Furthermore, if it is not needed, the user-interface can be kept simpler and the user will not have be exposed to unneeded complexity. Not providing any mechanism to help with this task puts the onus on the user to determine whether the word to be added indeed follows the standard pronunciation rules or not, and to provide an alternative spelling that does. These rules are not clearly defined and may even vary within subdomains of a language. This approach tends to break down with users who are either not very careful, not very familiar with the language and/or domain or who are not very well versed in phonetics which is clearly the majority of all users of speech recognition systems.

### 4.2 The Solution Based on the Regularity Measure

The current teaching presents a method to assess the applicability of a statistical system (like for instance a LTS as one example) when adding new words to a large vocabulary speech system like a speech recognition system. More specifically a solution is proposed that will allow to estimate the chances of success of a statistical Letter-to-Sound- System when adding yet unseen spellings to the vocabulary of a speech system.

The basis idea of the current invention is to use a criterion computed over the spelling of the word to be added, to determine whether it is likely to follow the standard rules of pronunciation for the particular language; or more specifically the standard rules of pronunciation of all the words used to create the statistical system of the speech system. In other words, one could say the criterion answers the question "Does this word look like anything known and used to build this speech system?" If it does, the proposed teaching assumes that the chances are good that one can create an adequate pronunciation model for the word as this corresponds with the type of words originally used to train the speech system's statistical system. Only in the case the criterion indicates a larger deviation from the known standard rules of the assumed pronunciation, some other method of adding the word to the speech system's vocabulary is to be used. As the preferred method (though not limited to) the invention suggests that the user is prompted to provide a sounds-like spelling pattern. In this situation, the automatic determination of the necessity of prompting for additional information on the pronunciation of a new word (for instance by a sounds-like spelling pattern) comes as a great help to the user. Employing such a measure has shown to be the key to create good pronunciations while not burdening the user with extraneous tasks (like asking them to always provide such a sounds-like-spelling).

As the current teaching allows to estimate the chances of success of the Letter-to-Sound System it therefore can take appropriate measures if faced with an irregular spelling; to be more precise, the irregularity between spelling and pronunciation. This behavior could also be used up-front when providing a dialog for the user to enter the new word. It can also be kept simple in case a "regular spelling" has been detected. In case one detects some irregular spelling, it is suggested to provide a different interface which prompts the user to enter a sounds-like-spelling for instance together with further explanations; as a further possibility (sound) samples could be provided also. However it is the fundamental approach of the current teaching that, as long as this is not really required as indicated by above mentioned criterion, a user will not be exposed to this more complex way of adding a new word to the vocabulary.

The current invention aims at producing a measure to predict if and when it is necessary to provide additional information on the pronunciation such as a sounds-like-spelling when adding a new word to a vocabulary. The teaching starts from the observation that words that generally do not obey the pronunciation rules of a language or domain are likely candidates for such action. The invention therefore develops and uses a model to calculate such a regularity measure and proposes how to use the resulting information in the online process of extending a vocabulary. If the regularity model detects regular spellings it does not prompt the user for additional information, thus saving an extra step in the process. Spellings which are classified as irregular are treated differently by immediately asking the user for additional information, which in the preferred case is a sounds-like-spelling pattern.

The system automatically measures whether the spelling matches its model of regularity of spelling. This is done by computing over the new spelling a score according to a pre-calculated statistical spelling language model (LM). The score is compared to a previously set threshold, which was determined on a corpus of data set aside from building the actual model. If the threshold is not met, a sounds-like spelling is deemed necessary. This information is conveyed to the user who is prompted/forced to provide the pseudo-spelling. Without this mechanism there is no hint as to when this would help or even be the only means to add a new word. On the other hand, always requiring such a pseudo-spelling would require additional work on the user's part and should only be regarded as a last resort.

As the preferred implementation for the regularity measure it is suggested to compute the perplexity of the orthographic representation of a word with respect to an N-letter language model. **Perplexity** is an information-theory term relating to the average number of decisions that have to be taken (binary questions that have to be asked) to determine the pronunciation of a letter during the recognition process. Informally perplexity may be regarded as the average number of following characters that an N-gram character-based language model may have to chose from, given the present history of characters already looked at. Formally, the perplexity is the reciprocal of the geometric average of the probabilities of an hypothesized string of characters. Perplexity is expressed in a number and is an indication of how many different letters are likely to follow a particular context of string of characters.
After the context "interna", the likely characters to follow could be "t" ("international"...), or "1" ("internal"). None of the other 254 ASCII characters will have much probability. Without a language model, the perplexity would be equal to the alphabet size (256 for a spelling vocabulary of the ASCII character set). The language model, greatly reduces the perplexity because it knows the likely letter combinations, without preventing character combinations to be used that it has not seen before.

**A spelling language model** contains a collection of probabilities that one letter follows another. Without such a model the probability that a specific letter is followed by another is the same for all characters in the alphabet. A language Model, as for instance an N-gram model, tries to predict Pr(S), the a priori probability of a character string S occurring in a given language. Theoretically one would like to predict a new character from an infinitely long history of predecessor characters. Practically, however, these probabilities would be impossible to compute. Thus a common approach is to approximate all histories by a model which maps all past histories to the same state. Thus one assumes that the occurrence of a character C is completely determined by the past N characters. Tri-gram models, for instance, use the 2 preceding characters to predict the current character. As the tri-gram frequencies may not be seen frequently enough to allow for good prediction, the tri-gram model is often combined with lower-order models predicting the bi- and uni-gram probabilities.

Thus according to the suggested powerful criterion a regularity value is determined by applying the statistical model of the actual language computing the matching of the proposed spelling to a large body of "regular" words of the language. For example, a tri-letter (or in general a N-letter) language model trained over such a large body can be used (actually tri-grams, bi-grams and uni-grams of letters are used in this model), with smoothing factors (weights) to control the influence of each of these 3 sub-models. The smoothing factors can be generated by procedures well-known in the state of the art. As the criterion, the computed perplexity of the proposed spelling with respect to this language model is compared to a threshold value to decide whether the conformity with respect to the pronunciation in said language or language domain is sufficient.

The proposed combination of a statistical-language model, like a tri-letter model for letter frequencies, and the process of generating a sounds-like-spelling when adding a new word to a speech-system results in performance as well as usability improvements; two of the ultimate factors determining the success or failure of a speech-system.

### 4.3 Language Model For Regularity Measurement and Determination of Threshold

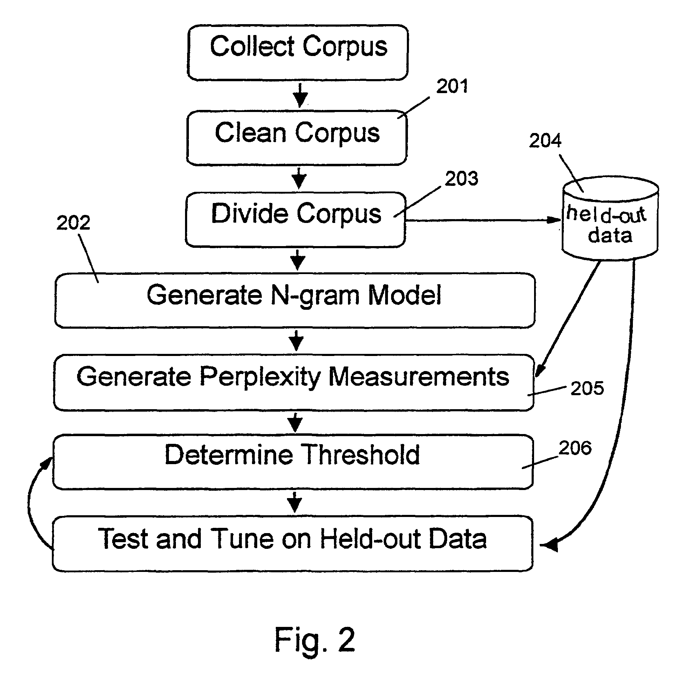

With reference to Fig. 2 the following will describe the process of building a spelling language model forming the base for the determination of the regularity value of a new word to be added to the vocabulary.
1. The process starts by collecting a "corpus" (201) of many words deemed to follow the "regular" rules of pronunciation for the particular language. Excluded are in particular acronyms ("IBM", "IEEE", etc.), words of foreign descent (e.g. for English "rendez-vous", "Gestalt", etc.), abbreviations ("Mr", "Mrs", "etc.", etc.) and the like.
2. Over this corpus, a statistical model of the sequence of letters present in these words is built according the state of the art. One preferred embodiment is a tri-letter language model (in general a N-letter language model could be used), computed by counting the number of times letters, and combinations of letters occur within said corpus.
   i. This model will count uni-letter frequencies, bi-letter frequencies, and tri-letter frequencies, and use these as approximations of the probability of such letter sequences. The construction and functioning of such N-grams models is known within the state of the art.
   ii. overall likelihood of a sequence of 3 letters is computed as a linear combination of the uni-letter, bi-letter and tri-letter likelihoods, with an added offset to give non-zero probabilities to never-observed letter sequences.
   iii The coefficients of the linear combination can be estimated by optimizing the performance of the model over some held-out corpus (204). A state of the art approach for this process can be found in the teaching of F.Jelinek and R.L.Mercer, "Interpolated estimation of Markov Source Parameters from Sparse Data" in "Proc. of the workshop on Pattern Recognition in Practice, North-Holland Publishing Company, 1980.
3. The threshold value of "regularity" is estimated as follows:
   i. A test corpus (204) consisting of new words (not used in training the language model or tuning it) is constituted (203). This test corpus should comprise both "regular" words and "special words", such as acronyms, abbreviations, words borrowed from foreign languages, etc.
   ii For each word in the test corpus the regularity is scored according to the model (205). For example for a tri-letter model, the perplexity of each word is computed according to the model.
   iii The words of the test corpus are sorted according to their score (i.e. the perplexity according to the model) building a frequency distribution reflecting for each regularity value the corresponding number of words.
   iv This frequency distribution defines a ranking allowing to determine a threshold above which a sounds-like-spelling when adding a word is deemed necessary (206).

The determination of the threshold is based on the following principles:
Assuming a representative test sample of spellings, the regular spellings will be distributed normally with regard to their perplexity values according to the generated model. Generally though, they will yield lower perplexity values than the irregular spellings. In the combined distribution which we obtain in step 3 of the above procedure, the intention is to try to locate that perplexity value that best separates irregular from regular spellings. By visually inspecting the frequency distribution and manually selecting a threshold for test purposes it has been proven that choosing a value in the area where the distribution curve flattens out into high-perplexity values will generally yield good results. Thus the proposed general approach is to determine for all test words of a test corpus their regularity values. These values are then used for generating the frequency distribution of said regularity values. Based on said frequency distribution a reference regularity value can be deduced as that relative maximum corresponding to the lowest conformity (i.e. the highest perplexity value). As has been found out by test scenarios choosing as threshold value a value with lower conformity (i.e. larger perplexity) than said reference regularity value in general will yield good results. Of course the experience and personal judgment of a system builder allows to further adjust a threshold that does neither generate too many false alarms on regular spellings nor let too many irregular spellings pass unnoticed.

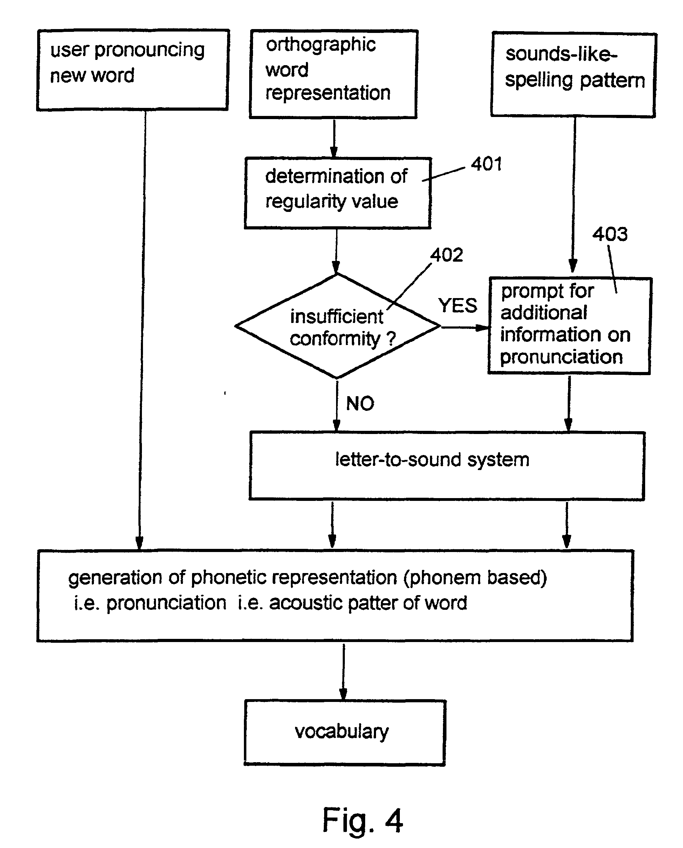

This situation is visualized in Fig. 3., which shows a typical set of perplexity value distributions over a large set of samples based on the perplexity measurements for a French data set using a tri-letter language model (LM). Near a perplexity value of 30 the frequency distribution shows a relative maximum. As can be seen, the curve smoothes out towards the high-perplexity end. According to the current invention this defines the zone best suited to set the threshold this approach is based upon; i.e. values for the threshold larger than that of the relative maximum are good candidates which separate irregular from regular spellings.

### 4.4 Adding a New Word at Runtime

Fig. 4. shows in a contrasting view with respect to Fig. 1 the process of adding a new word with yet unseen spelling and pronunciation to the vocabulary of a speech recognition system according to the current invention.
At runtime, when the user tries to add a new word the following steps are performed:
1. For the new word a matching measure, its regularity value, of the word spelling with respect to the model is calculated (401). In the case of our tri-letter language model, this is computed as the perplexity of the orthographic representation of the word.
2. If the perplexity is above the threshold determined above indicating an insufficient conformity (402) with respect to the pronunciation of said language (domain), the user is informed that this word probably does not follow the usual rules for pronunciation, and give opportunity to enter a sounds-like spelling that does (403). In this case the sounds-like spelling is used in the generation process of the phonetic representation.

### 4.5 An Example

Assuming a user might want to add the word "IEEE" to the vocabulary as it is not part of the predefined set of words. Its actual pronunciation "eye-triple-e" differs considerably from the way the word would be pronounced if one were to pronounce the sequence of letters in a "regular" way. Using the statistical mapping of letter-to-sound system and the user's utterance without taking care could result in producing a phonetic representation that starts with the vowel "i" followed a long vowel "e". Depending on the sound-quality that is being fed into the adding process and the quality of the matcher, this pronunciation may even pass a sanity check and become part of the users vocabulary. In that case not only will it hardly ever be recognized when it is uttered by the user, it will also hurt the overall recognition process by being recognized in the wrong places as the distorted model may match well in other, unwanted places. Using the proposed regularity value scoring method on the spelling, the system can prompt the user to provide a sounds-like-spelling for the actual word. This (after checking if it follows the rules of standard pronunciation) can the be used safely to generate an appropriate model of the pronunciation.

### 4.6 Further Extensions

The teaching outlined above can be extended in various directions:

Above scenario describes the application of the invention primarily with respect to a certain natural language. However, the model clearly also lends itself to any subset of a language or language domain. If for instance the speech-recognition system were crafted for a special domain, words outside this particular domain (but otherwise perfectly part of the actual language) could be detected and appropriate actions taken when adding them to the vocabulary. Thus this extension makes the invention applicable to a multitude of language domains.

If the comparison of the regularity value with the threshold value indicates that the conformity with the standard pronunciation is insufficient the prompting for additional information on the pronunciation of said word is not limited to a sounds-like-spelling pattern. The invention allows that actually any type of additional information increasing the reliability with respect to the pronunciation can be gathered. The speech system might even ask the user for some type of additional and direct acoustic input.

As a further extension instead of a single threshold alternatively a set of thresholds may be used to decide, whether the new word it is likely to follow the standard rules of pronunciation for the particular language. A first threshold could be used according to the lines described above to detect "very regular" words that will certainly not need any modifications. A second threshold (relating to a lower degree of conformity with the standard pronunciation) could indicate that additional measures like a sounds-like-spelling are definitely needed. Words whose scores fall in between these two thresholds may be handled by automatic modifications to the spellings. A possible embodiment could apply a set of matching rules transforming the spelling into a "more regular" spelling. The rules could be prefabricated and be used to model typical problematic letter combinations like certain known endings of foreign words.

By observing the development of the perplexity (or analogously the log-likelihood) score across the word, it may be possible to identify the problematic sequences of letters.
In a further embodiment of the current invention this information can be used to explicitly bring to the user's attention exactly which part of the new word causes the problem. This portion of the word then has to be treated differently, e.g. by using a sounds-like-spelling to describe its pronunciation. More specifically the scoring can even happen dynamically while the new word is being entered. Once an irregularity is detected, this can immediately be acted upon e.g. by prompting the user for an alternative description.

Clearly, as mapping letters to sounds is also one of the core activities of any Text-To-Speech system, the suggested scoring model can be used to detect irregular spellings when presented to the TTS system. This would allow the TTS to employ different strategies according to the type of word that is being transcribed. If several systems are available, the calculated score could be used to determine which one to choose.

So far as the measure to determine regularity the "perplexity" with respect to the language model has been exploited. However, other related measures like
"log-probability" lend themselves also to such a modeling. (Perplexity and log-probability may be regarded as two sides of the same coin measuring complementary aspects. Log-probability measures the average weighted probability of the letter combinations occurring in a word while entropy measures the average uncertainty of the letter-sequences. In other words, the proposed regularity measure may be expressed in terms of the log-probability or the perplexity.)

In a modular approach above teaching can be applied to a multitude of candidate vocabularies of a multitude of languages or language domains. For instance the spelling of a new word can be run against a regular model (say general German) and also against a model built from Latin spellings (say for a special medical domain) computing a multitude of regularity values corresponding to the individual vocabularies. In case of the above example the word is of Latin origin, the latter model will score higher on the new word and should be the one of choice to generate a pronunciation. Having several such models at hand and applying them in parallel is very valuable for special domains, such as the legal and medical domains.

### 5 Advantages of the Invention

The current invention proposes an automatic determination of the regularity of a proposed word with respect to the standard pronunciation of the language; this lowers the requirement for attention and skills on the user's part in the extension process of a vocabulary. It is neither left up to the user when additional information concerning the pronunciation of a new word are to be introduced to the speech system nor is this additional information omitted when it is needed. Otherwise in both cases the construction of inferior pronunciation models would be the consequence. As the recognition accuracy is strongly dependent on the quality of these models the proposed teaching results in an improved overall performance and higher recognition accuracy of the speech system. The quality of the generated pronunciations in speech systems is improved.

Furthermore, as a user's involvement by prompting him for additional information with respect to the pronunciation is reduced to a minimum, the user-interface can be kept simpler and the user will not have to be exposed to unneeded complexity. As words likely to be pronounced in a standard way do not require further action valuable time-savings are the result. This is a major selling argument for typical clients using speech-recognition systems such as lawyers and medical doctors.

The current teaching is inherently language and domain independent and may thus be applied to a variety of languages and domains without further extension. This property is of specific advantage in view of the large number of different languages and language domains which all can be supported with a single solution approach.

Finally the reduced number of failures during adding new words to a vocabulary leads to reduced user frustration and an improved perception of system usability.

Using as regularity value the computed perplexity of the spelling of said word with respect to a language model turned out to be a very effective measure for the likeliness of the regularity of the pronunciation. It has been determined that this statistical approach deals very well with unknown words and generalizes well on yet unseen data; it is better suited than rule-based approaches for such problems.

Prompting a sounds-like-spelling pattern representing the pronunciation of said new word as additional information on the pronunciation is a powerful approach to which users are used to and which is accepted by users.

Also the exploitation of a letter-to-sound system together with the additional information specified by the user for the derivation the acoustic pattern of said new word is beneficial in two aspects: it furnishes good pronunciation results and allows for a maximum of automatism in the derivation process.

Various tests have shown that the suggested methodology for determining the threshold value results in a value that best separates the regular from the irregular pronunciations. Moreover as a lot of data to be used as a corpus of test words to train the system is readily available the threshold value can be adjusted to an effective value by using a large corpus of test words.

Finally due to the current teaching's flexibility it can be exploited for all types of speech systems comprising speech recognition systems as well as speech synthesis systems.

## Claims

1. A computerized method of adding a new word to a vocabulary of a speech system said vocabulary comprising words and corresponding acoustic patterns for a language or language domain,
said method comprising a determination-step, determining for said new word a regularity value measuring the conformity with respect to the pronunciation in said language or language domain;
said method comprising a comparison-step, comparing said regularity value to a threshold value to decide, whether the conformity is insufficient;
said method comprising in the affirmative case a prompting-step, prompting for additional information on the pronunciation of said new word;
said method comprising an extension-step, adding said new word and an acoustic pattern of said new word to said vocabulary.

2. Method according to claim 1,
wherein in said determination-step said regularity value being based on the computed perplexity or log-probability of the spelling of said word with respect to a spelling language model.

3. Method according to claim 1,
wherein in said prompting-step said additional information comprising a sounds-like-spelling pattern representing the pronunciation of said new word.

4. Method according to claim 1,
wherein in said extension-step said acoustic pattern being derived from said additional information and from the pronunciation of said new word generated by a letter-to-sound system.

5. Method according to claim 1,
wherein in said comparison-step said threshold value being computed by the steps of
determining for all test words of a test corpus of words not part of said vocabulary their regularity values; and
determining the frequency distribution of said regularity values; and
determining from said frequency distribution as reference regularity value that relative maximum corresponding to the lowest conformity; and
choosing as threshold value a value with lower conformity than said reference regularity value.

6. Method according to claim 1,
wherein in said determination-step a multitude of regularity values with respect to a multitude of candidate vocabularies is determined and as selected vocabulary that candidate vocabulary is chosen, for which the regularity value indicates the largest conformity;
wherein in said extension-step said acoustic pattern is being derived using said selected vocabulary.

7. Method according to claim 2,
wherein said language model is being determined according a N-gram statistics.

8. Method according to anyone of the preceding claims,
wherein said speech system is a speech recognition system or a speech synthesis system.

9. A system comprising means adapted for carrying out the steps of the method according to anyone of the preceding claims 1 to 8.

10. A data processing program product for execution in a data processing system comprising software code portions for performing a method according to anyone of the preceding claims 1 to 8 when said data processing program product is loaded into said data processing system.

11. A computer program product stored on a computer usable medium, comprising computer readable program means for causing a computer to perform a method according to anyone of the preceding claims 1 to 8 when said computer program product is loaded into said computer.

## Patentansprüche

1. Computerverfahren für die Aufnahme eines neuen Worts in einen Wortschatz eines Sprachsystems, wobei der Wortschatz Wörter und zugehörige Lautmuster einer Sprache oder Sprachdomäne umfasst,
wobei das Verfahren einen Ermittlungsschritt umfasst, der einen Regularitätswert für das neue Wort ermittelt, welcher die Übereinstimmung mit der Aussprache der Sprache oder Sprachdomäne misst;
wobei das Verfahren einen Vergleichsschritt umfasst, der den Regularitätswert mit einem Schwellenwert vergleicht, um so zu entscheiden, ob die Übereinstimmung unzureichend ist;
wobei das Verfahren im Falle einer Bejahung einen Aufforderungsschritt umfasst, der zur Eingabe zusätzlicher Informationen zur Aussprache des neuen Worts auffordert;
wobei das Verfahren einen Erweiterungsschritt umfasst, der das neue Wort und ein Lautmuster des neuen Worts in den Wortschatz aufnimmt.

2. Verfahren nach Anspruch 1,
wobei in dem Ermittlungsschritt der Regularitätswert auf der berechneten Perplexität oder log-Wahrscheinlichkeit der Wortschreibung mit Blick auf ein Rechtschreibsprachmodell beruht.

3. Verfahren nach Anspruch 1,
wobei in dem Aufforderungsschritt die zusätzlichen Informationen ein Muster der klangähnlichen Schreibweise umfassen, das für die Aussprache des neuen Worts steht.

4. Verfahren nach Anspruch 1,
wobei in dem Erweiterungsschritt das Lautmuster aus den zusätzlichen Informationen und aus der Aussprache des neuen Worts, die durch ein Buchstaben-zu-Klang-System erzeugt wurde, abgeleitet wird.

5. Verfahren nach Anspruch 1,
wobei in dem Vergleichsschritt der Schwellenwert durch folgende Schritte berechnet wird:
Ermitteln der Regularitätswerte aller Testwörter einer Testwortmenge, die nicht Teil des Wortschatzes ist; und
Ermitteln der Häufigkeitsverteilung der Regularitätswerte; und
Ermitteln desjenigen relativen Maximums, das der geringsten Übereinstimmung entspricht, aus der Häufigkeitsverteilung als Regularitätsbezugswert; und
Auswählen eines Werts mit einer geringeren Übereinstimmung als der Regularitätsbezugswert als Schwellenwert.

6. Verfahren nach Anspruch 1,
wobei in dem Ermittlungsschritt eine Vielzahl von Regularitätswerten für eine Vielzahl von in Frage kommenden Wortschätzen ermittelt und als ausgewählter Wortschatz der in Frage kommende Wortschatz ausgewählt wird, dessen Regularitätswert auf die größte Übereinstimmung hinweist;
wobei in dem Erweiterungsschritt das Lautmuster unter Verwendung des ausgewählten Wortschatzes abgeleitet wird.

7. Verfahren nach Anspruch 2,
wobei das Sprachmodell gemäß einer N-Gram-Statistik ermittelt wird.

8. Verfahren nach einem beliebigen der vorangegangenen Ansprüche,
wobei das Sprachsystem ein Spracherkennungssystem oder ein Sprachsynthesesystem ist.

9. System, das ein Mittel umfasst, welches zur Durchführung der Verfahrensschritte gemäß einem beliebigen der vorangegangenen Ansprüche 1 bis 8 geeignet ist.

10. Datenverarbeitungsprogrammprodukt zur Ausführung in einem Datenverarbeitungssystem, das Softwarecodebestandteile zur Durchführung eines Verfahrens gemäß einem beliebigen der vorangegangenen Ansprüche 1 bis 8 umfasst, wenn das Datenverarbeitungsprogrammprodukt in das Datenverarbeitungssystem geladen wird.

11. Computerprogrammprodukt, das auf einem computernutzbaren Medium gespeichert ist und ein computerlesbares Programmmittel umfasst, mit dem ein Computer veranlasst wird, ein Verfahren gemäß einem beliebigen der vorangegangenen Ansprüche 1 bis 8 durchzuführen, wenn das Computerprogrammprodukt in den Computer geladen wird.

## Revendications

1. Procédé informatisé consistant à ajouter un nouveau mot à un vocabulaire d'un système vocal, ledit vocabulaire comprenant des mots et des séquences acoustiques correspondantes pour une langue ou un domaine de langue,
ledit procédé comprenant une étape de détermination, déterminant pour ledit nouveau mot une valeur de régularité mesurant la conformité par rapport à la prononciation dans ladite langue ou domaine de langue,
ledit procédé comprenant une étape de comparaison, comparant ladite valeur de régularité à une valeur de seuil pour définir si la conformité est insuffisante,
ledit procédé comprenant, dans le cas d'une affirmation, une étape de demande demandant des informations supplémentaires sur la prononciation dudit nouveau mot,
ledit procédé comprenant une étape d'extension, ajoutant ledit nouveau mot et une séquence acoustique dudit nouveau mot audit vocabulaire.

2. Procédé selon la revendication 1,
dans lequel, dans ladite étape de détermination, ladite valeur de régularité est fondée sur l'incertitude calculée ou la probabilité logarithmique de la manière d'épeler ledit mot par rapport à un modèle d'orthographe de langue.

3. Procédé selon la revendication 1,
dans lequel, dans ladite étape de demande, lesdites informations supplémentaires comprennent une séquence pour épeler avec des sons représentant la prononciation dudit nouveau mot.

4. Procédé selon la revendication 1,
dans lequel, dans ladite étape d'extension, ladite séquence acoustique est obtenue à partir desdites informations supplémentaires et à partir de la prononciation dudit nouveau mot générée par un système à lettre vers un son.

5. Procédé selon la revendication 1,
dans lequel, dans ladite étape de comparaison, ladite valeur de seuil est calculée par les étapes consistant à
déterminer pour tous les mots de test d'un corpus de mots de test ne faisant pas partie dudit vocabulaire, leurs valeurs de régularité, et
déterminer la distribution en fréquence desdites valeurs de régularité, et
déterminer d'après ladite distribution en fréquence en tant que valeur de régularité de référence, le maximum relatif correspondant à la conformité la plus basse, et
choisir en tant que valeur de seuil, une valeur ayant une conformité inférieure à ladite valeur de régularité de référence.

6. Procédé selon la revendication 1,
dans lequel, dans ladite étape de détermination, une multitude de valeurs de régularité par rapport à une multitude de vocabulaires candidats est déterminée, et en tant que vocabulaire sélectionné, est choisi le vocabulaire candidat pour lequel la valeur de régularité indique la conformité la plus grande,
dans lequel, dans ladite étape d'extension, ladite séquence acoustique est obtenue en utilisant ledit vocabulaire sélectionné.

7. Procédé selon la revendication 2,
dans lequel ledit modèle de langue est déterminé conformément à des statistiques à N-gammes.

8. Procédé selon l'une quelconque des revendications précédentes, dans lequel ledit système vocal est un système de reconnaissance de la parole ou un système de synthèse de la parole.

9. Système comprenant un moyen conçu pour exécuter les étapes du procédé selon l'une quelconque des revendications précédentes 1 à 8.

10. Produit de programme de traitement de données destiné à une exécution dans un système de traitement de données comprenant des parties de code de logiciel afin d'exécuter un procédé selon l'une quelconque des revendications précédentes 1 à 8, lorsque ledit produit de programme de traitement de données est chargé dans ledit système de traitement de données.

11. Produit de programme informatique mémorisé sur un support utilisable par un ordinateur, comprenant un moyen de programme lisible par un ordinateur destiné à amener un ordinateur à exécuter un procédé selon l'une quelconque des revendications précédentes 1 à 8 lorsque ledit produit de programme informatique est chargé dans ledit ordinateur.
